Europäisches Patentamt

European Patent Office

Office européen des brevets

(19)

(11) Publication number: **0 309 461 B1**

## EUROPEAN PATENT SPECIFICATION

(12)

(45) Date of publication of patent specification: **09.12.92**  (51) Int. Cl.⁵: **G01K 7/00**, G01K 17/00

(21) Application number: **87903470.0**

(22) Date of filing: **20.05.87**

(86) International application number:
**PCT/SE87/00249**

(87) International publication number:
**WO 87/07372 (03.12.87 87/27)**

(54) **METHOD AND DEVICE FOR DETERMINING THE ABSOLUTE TEMPERATURE OF A MEASURING BODY.**

(30) Priority: **20.05.86 SE 8602265**

(43) Date of publication of application:
**05.04.89 Bulletin 89/14**

(45) Publication of the grant of the patent:
**09.12.92 Bulletin 92/50**

(84) Designated Contracting States:
**CH DE FR GB IT LI**

(56) References cited:
**GB-A- 2 075 675      US-A- 3 314 288
US-A- 3 665 762      US-A- 3 950 991
US-A- 4 282 753      US-A- 4 588 308**

(73) Proprietor: **SUURKUUSK, Jaak
Gränsvägen 21
S-176 46 Järfälla(SE)**

(72) Inventor: **SUURKUUSK, Jaak
Gränsvägen 21
S-176 46 Järfälla(SE)**

(74) Representative: **Rostovanyi, Peter et al
AWAPATENT AB Box 5117
S-200 71 Malmö(SE)**

**Description**

The present invention relates to a method for determining the absolute temperature $T_A$ of a measuring body at the time t by means of a reference body whose thermal capacity c is known when the heat transmission coefficient p between said reference body and said measuring body is known. The invention also comprises a device for carrying the method into effect.

In some technical applications, there is a need for measuring, with extremely high resolution, the temperature over a wide range. One example are scanning calorimeters for studying, for example, the thermal capacity of chemical, physical and biological systems as a function of the temperature in order to gain increased insight in the properties of the system and to be able to describe these properties thermodynamically.

In calorimetric measurements and other measurements where high-precision measurement and control of temperatures are essential, use is made today of, for example, platinum resistance thermometers whose resolution over a temperature range of about 150° is approximately $10^{-3}$°, or quartz thermometers with a resolution of about $10^{-5}$°. However, for various reasons, these thermometers are not entirely satisfactory. For example, the resolution of the platinum resistance thermometer is not sufficiently high for measurements in connection with biological systems. Although a high resolution is per se obtainable with this thermometer, the dynamic range will then be small. Actually, the resolution of the quartz thermometer is sufficient, but it uses a quartz crystal whose frequency is dependent on temperature, and in order to obtain a resolution as high as $10^{-5}$°, the frequency must be counted for about 100 sec., which is entirely unacceptable for many types of measurement since one cannot then measure more rapid fluctuations.

GB-2,075,675 discloses a method and an apparatus for the calorimetric study of composite materials, especially the transformation of the composite material due to a temperature change. For this purpose a test sample of the composite material and a sample of a reference material are heated in such a way that a component of the test sample undergoes transformation, the temperature difference between the reference and the test sample is monitored and the total heat flux in the composite material and that due to the transforming component are determined.

US-3,314,288 discloses a differential calorimeter for enthalpy analysis, comprising two cylindrical cells, a cylindrical shell, fins connecting the cells with the shells, and a galvanometer, being capable of detecting a thermal electromotive force developed as a result of temperature gradients existing in the fins. The thermal electromotive force is used to determine the enthalpy of a sample.

However, these prior art calorimeters are not used for measuring absolute temperature of a measuring body.

It therefore is the object of this invention to provide a novel method and a novel device for absolute temperature measurement with high resolution over a wide range.

This object is achieved by means of a method which is of the type mentioned by way of introduction and in which the temperature difference $T_A$-$T_R$ between the measuring body and the reference body is measured, the absolute temperature $T_A$ of the measuring body at the time t being calculated as

$$T_A = T_A^0 + [\int_0^t V(t) \cdot dt + \frac{c}{p}(V(t) - V(0))] \frac{p}{c \cdot g} \quad \ldots (1)$$

wherein $T_A^0$ is the absolute temperature of the measuring body at the time 0, V(t) is a physical parameter mathematically related to the measured temperature difference $T_A$-$T_R$ and g is a proportionality constant indicating the mathematical relation between V(t) and $T_A$-$T_R$.

The method according to the invention can be carried into effect by means of a device which comprises means for determining the temperature difference $T_A$-$T_R$ between the measuring body and the reference body, and means for calculating the absolute temperature $T_A$ of said measuring body at the time t according to the formula

$$T_A = T_A^0 + [\int_0^t V(t) \cdot dt + \frac{c}{p}(V(t) - V(0))] \frac{p}{c \cdot g},$$

2

in which the parameters have the meaning indicated above.

The method and the device described above make it possible to measure the temperature with a resolution of at least about $10^{-6}$ ° over a range from at least about -40°C to at least about 120°C. In other words, the present invention gives a higher resolution over an essentially wider range than is possible with prior art devices. A further advantage of the invention is that it is extremely well suited for use with calorimeters.

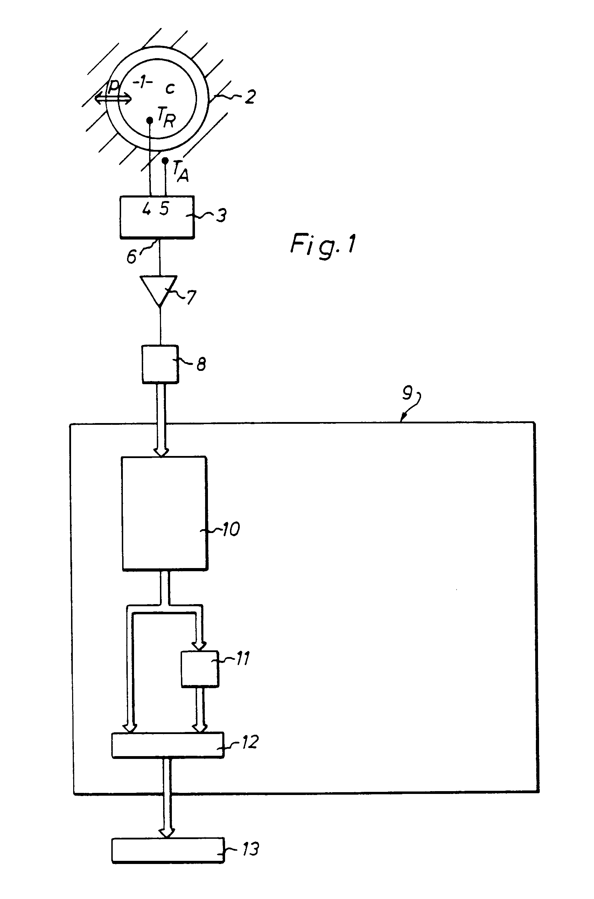

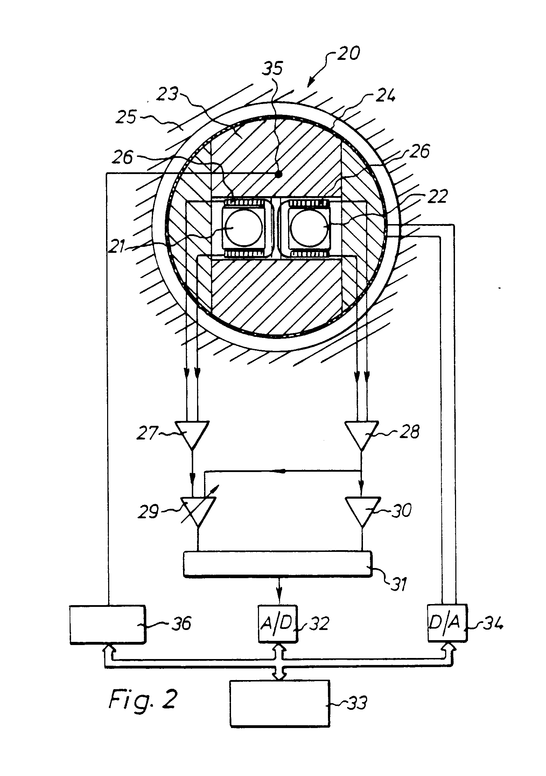

A number of non-restrictive embodiments of the present invention will now be described with reference to the accompanying drawings. Fig. 1 is a schematic view illustrating a device according to the invention for absolute temperature measurement. Fig. 2 illustrates the application of the present invention to a calorimeter.

The device shown in Fig. 1 for measuring the absolute temperature $T_A$ of a measuring body 2 comprises a reference body 1 which may consist of, for example, gold, silver, copper, aluminium or some other material whose thermal capacity c is known and in which no phase transition occurs within the temperature range for which the device is intended. The reference body must be arranged such that the heat transmission coefficient p between the reference body 1 and the measuring body 2 is known or can be determined. Such determination is effected by means of a technique well known to a person skilled in the art.

The device further comprises a means 3 for determining the temperature difference $(T_A-T_R)$ between the measuring body 2 and the reference body 1. The means 3 may comprise, for example, one or more metallic thermocouples, semi-conductor thermocouples (Peltier modules) or thermistors coupled to a resistance bridge, or platinum or copper resistance thermometers. The measuring means 3 has a first input 4 connected with the reference body 1, a second input 5 connected with the measuring body 2, and an output 6 coupled to an amplifier 7. The amplifier output is in turn coupled to the input of an analog-to-digital converter 8 having a resolution of 12-14 bits and having its outputs connected to the inputs of a calculating means 9 which preferably is a microprocessor. The calculating means 9 comprises means 10 for calculating the absolute temperature $T_A$ of the measuring body at the time t according to the above formula 1. In the embodiment illustrated, the calculating means 9 also comprise means 11 for correcting the thermal inertia of the measuring means 3 according to formula

$$T_A(corr) = T_A + \tau_p \times \frac{dT_A}{dt} \qquad \ldots (2)$$

in which $\tau_p$ is a time constant. Finally, the calculating means 9 comprise means 12 for selecting either the absolute temperature $T_A$ as calculated by the means 10, or the $T_A$ value as corrected by the means 11. The means 10-12 preferably are in software form. Finally, the output of the calculating means 9 is connected to a display unit 13 for displaying the absolute temperature.

Before the function of the device illustrated in Fig. 1 is described, the above-mentioned formula 1 for calculating the absolute temperature will be derived. For the output signal of the measuring means 3

$$V = g \times (T_A-T_R) \qquad (3)$$

in which V is a physical parameter mathematically related to the temperature difference between the measuring body 2 and the reference body 1, g is a proportionality constant indicating the mathematical relation between V and the temperature difference $T_A-T_R$, $T_A$ is the temperature of the measuring body, and $T_R$ is the temperature of the reference body.

Derivation of formula 3 in respect of time gives

$$\frac{dV}{dt} = g \left( \frac{dT_A}{dt} - \frac{dT_R}{dt} \right) \iff \frac{dT_R}{dt} = \frac{dT_A}{dt} - \frac{1}{g} \cdot \frac{dV}{dt} \qquad \ldots (4)$$

Inserting 3 and 4 in the following formula derived from the first main theorem of thermodynamics,

$$c \, \frac{dT_R}{dt} = p(T_A - T_R) \qquad \ldots (5)$$

in which c is the thermal capacity of the reference body 1 and p is the heat transmission coefficient between the reference body 1 and the measuring body 2, gives

$$\frac{dT_A}{dt} = \frac{p}{c \cdot g} \left( V + \frac{c}{p} \cdot \frac{dV}{dt} \right) \qquad \ldots (6)$$

Integration of this expression gives the absolute temperature $T_A$ of the measuring body at the time t as

$$T_A = T_A^0 + \left[ \int_0^t V(t) \cdot dt + \frac{c}{p} (V(t) - V(0)) \right] \frac{p}{c \cdot g}$$

It should also be pointed out in this connection that the thermal capacity c, the heat transmission coefficient p, and the constant g are temperature dependent, which, as will be described below, must be duly considered upon measurement.

The function of the device illustrated in Fig. 1 will now be described. If the temperature dependence of the thermal capacity c, the heat transmission coefficient p, and the function g are not known, this must first be determined before the device can be used for measuring purposes. This is done by a reference measurement for a number of temperatures, for example 3-4 temperatures, and a subsequent polynomial adaptation. The temperature dependence need be determined but once since the above-mentioned parameters are material constants, which means that their temperature dependence does not vary.

Furthermore, the temperature $T_A^0$ of the measuring body 2 at the time 0 must be determined, which can be done by means of an absolute temperature gauge, or by calibration against, for example, an ice-water reference.

Then the temperature $T_A$ of the measuring body at an optional time t can be determined as follows: The temperature difference between the measuring body 2 and the reference body 1 is determined by means of the measuring means 3 which supplies an output signal V proportional to the temperature difference. The output signal V is amplified in the amplifier 7 and analog-to-digital converted in the analog-to-digital converter 8. After that, the microprocessor 9 calculates the absolute temperature $T_A$ of the measuring body 2 by means of formula 1. If very rapid sequences are to be recorded, the calculated absolute temperature is corrected by means of formula 2. However, this entails a certain delay before the measuring result is obtained, for which reason this technique is unsuitable when the result is to be used for control purposes. Finally, one chooses that of the two temperature values which is to be displayed in the character display unit 13 of the selector unit 12.

To ensure that the measuring result is not affected by interference signals, recalibration is preferably carried out at regular intervals.

Fig. 2 illustrates the application of the invention to a twin calorimeter 20. The calorimeter comprises two sample holders 21, 22 for, respectively, a measuring sample and a reference sample, an aluminium block 23 surrounded by heating means 24, and a surrounding block 25 with controlled temperature. By means of this calorimeter, it is possible to determine, for example, the thermal capacity of a measuring sample by supplying the same amount of heat to the two samples via the heating means 24 and measuring the temperature difference between the measuring sample and the reference sample. The temperature difference is a measure of the difference in thermal capacity between the samples, and if the thermal capacity of the reference sample is known, the thermal output of the measuring sample can thus be determined. For measuring the temperature difference, the calorimeter comprises in known manner Peltier elements 26, an amplifier 27 for the measuring sample signal, an amplifier 28 for the reference sample signal, and a differential amplifier 29. The output signal from the differential amplifier 29 indicates the temperature difference between the measuring sample and the reference sample and thus constitutes the calorimetric signal.

For measurements of the type here concerned, it is desired to control the temperature within the

4

aluminium block 23 very carefully, and therefore it is also important that the temperature therein can be measured with high resolution. For this measurement, use is preferably made of the method according to the invention since one can utilise the output signal already available from the reference sample amplifier 28. This signal which represents the temperature difference between the reference sample which corresponds to the reference body in the device shown in Fig. 1, and the aluminium block 23 which corresponds to the measuring body in the said Figure, is supplied via an amplifier 30 and a multiplexer 31 to an analog-to-digital converter 32 and on to the microprocessor 33 in which the absolute temperature of the aluminium block 23 is calculated by means of the above-mentioned formula 1. The microprocessor 33 then supplies a temperature control signal dependent on the temperature thus determined to a digital-to-analog converter 34 and on to the heating means 24. For the sake of completeness, it should be mentioned that the device also comprises a conventional measuring probe 35 and a conventional temperature measuring device 36 whose output signal is supplied to the microprocessor 33 for purposes of calibration.

Even though the method and the device according to the present invention have been described in connection with a calorimeter, this must not be interpreted to mean that the invention is limited to this application. The principles of the invention are also applicable to, for example, temperature measurement on surfaces, or in gases or liquids. Furthermore, the invention is not limited to the embodiment described above, and many modifications are possible within the scope of the appended claims.

## Claims

1. A method for determining the absolute temperature $T_A$ of a measuring body (2) at the time t by means of a reference body (1) whose thermal capacity c is known when the heat transmission coefficient p between said reference body (1) and said measuring body (2) is known, the temperature difference ($T_A$-$T_R$) between the measuring body (2) and the reference body (1) being measured, and the absolute temperature $T_A$ of the measuring body at the time t being calculated as

$$T_A = T_A^0 + \left[ \int_0^t V(t) \cdot dt + \frac{c}{p} (V(t) - V(0)) \right] \frac{p}{c \cdot g}$$

wherein $T_A^0$ is the absolute temperature of the measuring body at the time 0, $V(t)$ is a physical parameter mathematically related to the measured temperature difference ($T_A$-$T_R$) and g is a proportionality constant indicating the mathematical relation between $V(t)$ and ($T_A$-$T_R$).

2. A device for determining the absolute temperature $T_A$ of a measuring body (2) at the time t by means of a reference body (1) whose thermal capacity c is known when the heat transmission coefficient p between said reference body (1) and said measuring body (2) is known, the device comprising means (3) for determining the temperature difference ($T_A$-$T_R$) between the reference body and the measuring body, and means (9) for calculating the absolute temperature $T_A$ of said measuring body at the time t according to the formula

$$T_A = T_A^0 + \left[ \int_0^t V(t) \cdot dt + \frac{c}{p} (V(t) - V(0)) \right] \frac{p}{c \cdot g},$$

wherein $T_A^0$ is the absolute temperature of the measuring body at the time 0, $V(t)$ is a physical parameter mathematically related to the measured temperature difference ($T_A$-$T_R$) and g is a proportionality constant indicating the mathematical relation between $V(t)$ and ($T_A$-$T_R$).

3. A device as claimed in claim 2, **characterised** by analog-to-digital converting means (8) coupled between said means (3) for determining the temperature difference and said means (9) for calculating the absolute temperature.

4. A device as claimed in claim 2 or 3, **characterised** in that said means (9) for calculating the absolute temperature $T_A$ comprise means (11) for correcting the thermal inertia of said means (3) for determining the temperature difference ($T_A$-$T_R$) according to formula

$$T_A(corr) = T_A + \tau_p \times \frac{dT_A}{dt}.$$

**Patentansprüche**

1.  Verfahren zur Bestimmung der absoluten Temperatur $T_A$ eines Messkörpers (2) beim Zeitpunkt t mittels eines Bezugskörpers (1), dessen Wärmekapazität c bekannt ist, wenn die Wärmeübergangszahl p zwischen dem Bezugskörper (1) und dem Messkörper (2) bekannt ist, wobei der Temperaturunterschied ($T_A$-$T_R$) zwischen dem Messkörper (2) und dem Bezugskörper (1) gemessen wird, und die absolute Temperatur $T_A$ des Messkörpers beim Zeitpunkt t als

$$T_A = T_A^O + [\int_O^t V(t) . dt + \frac{c}{p} (V(t) - V(0))] \frac{p}{c.g}$$

    berechnet wird, wobei $T_A^O$ die absolute Temperatur des Messkörpers beim Zeitpunkt 0 ist, V(t) ein physischer Parameter ist, der mit dem gemessenen Temperaturunterschied ($T_A$-$T_R$) mathematisch verwandt ist, und g eine Proportionalitätskonstante ist, die das mathematische Verhältnis zwischen V(t) und ($T_A$-$T_R$) anzeigt.

2.  Vorrichtung zur Bestimmung der absoluten Temperatur $T_A$ eines Messkörpers (2) beim Zeitpunkt t mittels eines Bezugkörpers (1), dessen Wärmekapazität c bekannt ist, wenn die Wärmeübergangszahl p zwischen dem Bezugskörper (1) und dem Messkörper (2) bekannt ist, wobei die Vorrichtung Mittel (3) zur Bestimmung des Temperaturunterschieds ($T_A$-$T_R$) zwischen dem Bezugskörper und dem Messkörper und Mittel (9) zur Berechnung der absoluten Temperatur $T_A$ des Messkörpers beim Zeitpunkt t gemäss der Formel

$$T_A = T_A^O + [\int_O^t V(t) . dt + \frac{c}{p} (V(t) - V(0))] \frac{p}{c.g}$$

    umfasst, in der $T_A^O$ die absolute Temperatur des Messkörpers beim Zeitpunkt 0 ist, V(t) ein physischer Parameter ist, der mit dem gemessenen Temperaturunterschied ($T_A$-$T_R$) mathematisch verwandt ist, und g eine Proportionalitätskonstante ist, die das mathematische Verhältnis zwischen V(t) und ($T_A$-$T_R$) anzeigt.

3.  Vorrichtung nach Anspruch 2, **gekennzeichnet** durch Analog-Digital-Umsetzer (8), die zwischen den genannten Mitteln (3) zur Bestimmung des Temperaturunterschieds und den genannten Mitteln (9) zur Berechnung der absoluten Temperatur geschaltet sind.

4.  Vorrichtung nach Anspruch 2 oder 3, dadurch **gekennzeichnet**, dass die Mittel (9) zur Berechnung der absoluten Temperatur $T_A$ Mittel (11) zur Korrigierung der Wärmeträgheit der Mittel (3) zur Bestimmung des Temperaturunterschieds ($T_A$-$T_R$) gemäss der Formel

$$T_A (corr) = T_A + \tau_p \times \frac{dT_A}{dt}$$

    umfassen.

**Revendications**

1. Procédé de détermination de la température absolue $T_A$ d'un corps de mesure (2) au temps t à l'aide d'un corps de référence (1) dont la capacité thermique c est connue, lorsque le coefficient p de transmission de chaleur entre le corps de référence (1) et le corps de mesure (2) est connu, la différence de températures ($T_A$-$T_R$) entre le corps de mesure (2) et le corps de référence (1) étant mesurée, et la température absolue $T_A$ du corps de mesure au temps t étant calculée sous la forme

$$T_A = T_A^0 + [\int_0^t V(t).dt + (c/p)(V(t)-V(0))] (p/c.g)$$

$T_A^0$ étant la température absolue du corps de mesure au temps 0, V(t) étant un paramètre physique lié mathématiquement à la différence de températures ($T_A$-$T_R$) qui est mesurée et g étant une constante de proportionnalité indiquant la relation mathématique entre V(t) et ($T_A$-$T_R$).

2. Appareil de détermination de la température absolue ($T_A$) d'un corps de mesure (2) au temps t à l'aide d'un corps de référence (1) dont la capacité thermique c est connue, lorsque le coefficient p de transmission de chaleur entre le corps de référence (1) et le corps de mesure (2) est connu, l'appareil comprenant un dispositif (3) destiné à déterminer la différence de températures ($T_A$-$T_R$) entre le corps de référence et le corps de mesure, et un dispositif (9) de calcul de la température absolue $T_A$ du corps de mesure au temps t, d'après la relation

$$T_A = T_A^0 + [\int_0^t V(t).dt + (c/p)(V(t)-V(0))] (p/c.g)$$

$T_A^0$ étant la température absolue du corps de mesure au temps 0, V(t) étant un paramètre physique relié mathématiquement à la différence mesurée de températures ($T_A$-$T_R$) et g étant une constante de proportionnalité représentative de la relation mathématique entre V(t) et ($T_A$-$T_R$).

3. Appareil selon la revendication 2, caractérisé par un dispositif (8) de conversion analogique-numérique couplé entre le dispositif (3) de détermination de la différence de températures et le dispositif (9) de calcul de la température absolue.

4. Appareil selon la revendication 2 ou 3, caractérisé en ce que le dispositif (9) de calcul de la température absolue $T_A$ comporte un dispositif (11) de correction de l'inertie thermique du dispositif (3) de détermination de la différence de températures ($T_A$-$T_R$) suivant la formule

$T_A(corr) = T_A + \tau p^\bullet(dT_A/dt).$

Fig.1

Fig. 2